# EUROPÄISCHE PATENTANMELDUNG

(11) **EP 4 649 806 A1**
(43) Veröffentlichungstag der Anmeldung: **19.11.2025**
(21) Anmeldenummer: 25165535.3
(22) Anmeldetag: 24.03.2025
(51) Int. Cl.: A01C 7/10, A01C 7/08

(54) **VERFAHREN ZUM BETREIBEN EINER LANDWIRTSCHAFTLICHEN AUSBRINGMASCHINE UND LANDWIRTSCHAFTLICHE AUSBRINGMASCHINE**

(30) Priorität: 15.05.2024 DE 102024113619
(71) Anmelder: Amazonen-Werke H. Dreyer SE & Co. KG, 49205 Hasbergen (DE)
(72) Erfinder: Bührke, Johannes, 49205 Hasbergen (DE); TECKEMEYER, Stephan, 49205 Hasbergen (DE)

(57) **Zusammenfassung**

Die Erfindung betrifft ein Verfahren zum Betreiben einer landwirtschaftlichen Ausbringmaschine, mit den Schritten: Kalibrieren der landwirtschaftlichen Ausbringmaschine, wobei eine elektronische Steuerungseinrichtung (32) beim Kalibrieren der landwirtschaftlichen Ausbringmaschine die Ausbringmenge beeinflussende und fahrgeschwindigkeitsabhängige Dosiervorgaben für das Ausbringmaterial (M) an Materialeigenschaften des Ausbringmaterials (M) anpasst, und Verteilen von Ausbringmaterial (M) auf mehrere Ausbringeinheiten (34, 34a-34d) mittels eines Materialverteilsystems (10) der landwirtschaftliche Ausbringmaschine, wobei eine Materialeinspeisevorrichtung (20) des Materialverteilsystems (10) von einem Einspeisedosierer (16) unter Einhaltung der angepassten fahrgeschwindigkeitsabhängigen Dosiervorgaben vordosiertes Ausbringmaterial (M) aufnimmt und temporär als Einspeisevorrat (EV) bevorratet, um auf Grundlage des Einspeisevorrats (EV) und einer in die Materialeinspeisevorrichtung (20) eingeleiteten Luftströmung mehrere mit dem Ausbringmaterial (M) beladene Förderluftströmungen (F) zu erzeugen.

## Beschreibung

Die Erfindung betrifft ein Verfahren zum Betreiben einer landwirtschaftlichen Ausbringmaschine nach dem Oberbegriff des Patentanspruchs 1 und eine landwirtschaftliche Ausbringmaschine nach dem Oberbegriff des Patentanspruchs 14.

Ausbringmaterialien werden in landwirtschaftlichen Ausbringmaschinen aufgrund ihrer voneinander abweichenden Materialeigenschaften unterschiedlich verarbeitet. Somit ist die Ausbringmaschine im Vorfeld eines Ausbringvorgangs zu kalibrieren, wodurch die Ausbringmenge beeinflussende und fahrgeschwindigkeitsabhängige Dosiervorgaben für das Ausbringmaterial an Materialeigenschaften des Ausbringmaterials angepasst werden.

Zum Kalibrieren von Sämaschinen und Düngerstreuern ist bisher eine Ausbringmenge zu berechnen und eine sogenannte Abdrehprobe zu nehmen. Bei Sämaschinen ist bspw. zunächst eine Aussaatstärke in kg/ha zu bestimmen. Diese ist unter anderem abhängig von dem Tausendkorngewicht, der Kornanzahl pro Quadratmeter und der Keimfähigkeit des auszubringenden Saatguts. Anschließend ist die abzudrehende Saatgutmenge für eine Abdrehfläche anhand der Aussaatstärke zu bestimmen. Die Menge des bei dem anschließenden Abdrehvorgang abgedrehten Saatguts legt die Sämaschine dann der Kalibrierung zugrunde.

Die Kalibrierung von Ausbringmaschinen wird von den Maschinenführern als aufwendig wahrgenommen und führt zu einer Verzögerung des Ausbringvorgangs. Außerdem wird die Kalibrierung der landwirtschaftlichen Ausbringmaschine bisher einmalig vor Beginn des Ausbringvorgangs vorgenommen, sodass etwaige Veränderungen der Materialeigenschaften des Ausbringmaterials während des Ausbringvorgangs unberücksichtigt bleiben.

Die der Erfindung zugrunde liegende Aufgabe besteht also darin, die Kalibrierung von landwirtschaftlichen Ausbringmaschinen zu vereinfachen und/oder zu verbessern.

Die Aufgabe wird gelöst durch ein Verfahren der eingangs genannten Art, wobei das Kalibrieren der landwirtschaftlichen Ausbringmaschine unter Verwendung eines Kraftaufnehmers der landwirtschaftlichen Ausbringmaschine erfolgt, welche eine Gewichtskraft ermittelt, welche zumindest anteilig auch eine von einem Einspeisevorrat in der Materialeinspeisevorrichtung ausgehende Gewichtskraft umfasst.

Dadurch, dass beim Kalibrieren der landwirtschaftlichen Ausbringmaschine ein Kraftaufnehmer eingesetzt wird, welcher die Gewichtskraft des Einspeisevorrats detektiert, wird die Kalibrierung der Ausbringmaschine wesentlich vereinfacht. Eine Abdrehprobe ist zum Kalibrieren der landwirtschaftlichen Ausbringmaschine nicht länger erforderlich.

In einer bevorzugten Ausführungsform des erfindungsgemäßen Verfahrens ermittelt die Steuerungseinrichtung beim Kalibrieren der landwirtschaftlichen Ausbringmaschine eine Gewichtskraftänderung auf Grundlage der Messwerte des Kraftaufnehmers der landwirtschaftlichen Ausbringmaschine und vergleicht die Gewichtskraftänderung mit einem Sollwert. Der Sollwert entspricht einer prognostizierten Menge an Ausbringmaterial, die der Einspeisedosierer in der betrachteten Zeit bzw. während der Überfahrzeit einer betrachteten Fläche ausgebracht haben sollte. Wenn die Gewichtskraftänderung über ein Toleranzmaß hinaus von dem Sollwert abweicht, ist eine Anpassung der die Ausbringmenge beeinflussenden und fahrgeschwindigkeitsabhängigen Dosiervorgaben für das Ausbringmaterial erforderlich.

Das erfindungsgemäße Verfahren wird ferner dadurch vorteilhaft weitergebildet, dass die Steuerungseinrichtung das Kalibrieren der landwirtschaftlichen Ausbringmaschine im Rahmen einer Vorkalibrierung vor dem Ausbringvorgang durchführt. Durch die Ausführung einer Vorkalibrierung kann der Ausbringvorgang direkt unter Anwendung von an das Ausbringmaterial angepassten Dosiervorgaben starten. Ein Mengenfehler zu Beginn des Ausbringvorgangs wird somit effektiv vermieden.

Das erfindungsgemäße Verfahren wird ferner dadurch vorteilhaft weitergebildet, dass bei der Vorkalibrierung kein Ausbringmaterial aus der Materialeinspeisevorrichtung ausgeleitet wird. Bei der Vorkalibrierung wird bspw. keine Luftströmung in die Materialeinspeisevorrichtung eingeleitet und/oder es werden keine mit Ausbringmaterial beladenen Förderluftströmungen erzeugt. Die von der Steuerungseinrichtung auf Grundlage der Messwerte des Kraftaufnehmers ermittelte Gewichtskraftänderung ist somit auf die Einspeisung des Ausbringmaterials durch den Einspeisedosierer zurückzuführen. Es ist nicht erforderlich, die ermittelte Gewichtskraftänderung aufgrund einer gleichzeitigen Materialausleitung aus der Materialeinspeisevorrichtung rechnerisch zu korrigieren. Die Vorkalibrierung kann somit mit einer vergleichsweise hohen Genauigkeit ausgeführt werden.

In einer weiteren bevorzugten Ausführungsform des erfindungsgemäßen Verfahrens führt die Steuerungseinrichtung das Kalibrieren der landwirtschaftlichen Ausbringmaschine im Rahmen einer Zwischenkalibrierung einfach oder mehrfach während eines Ausbringvorgangs durch. Während eines Ausbringvorgangs können sich die Materialeigenschaften des Ausbringmaterials ändern. Die Materialeigenschaften des Ausbringvorgangs können sich bspw. aufgrund einer Befüllung eines Vorratsbehälters der Ausbringmaschine mit Ausbringmaterial aus unterschiedlichen Chargen ergeben. Ferner können Luftfeuchtigkeit und/oder Niederschlag zu einem feuchtigkeitsbedingten Anstieg des Gewichts des Ausbringmaterials führen. Außerdem können Teilmengen des Ausbringmaterials eine abweichende Korngröße und somit abweichende Fließeigenschaften aufweisen. Durch eine einfache oder mehrfache Zwischenkalibrierung während eines Ausbringvorgangs können derartige Änderungen der Materialeigenschaften erfasst und bei der Bestimmung der materialspezifischen Dosiervorgaben berücksichtigt werden.

Es ist ferner ein erfindungsgemäßes Verfahren bevorzugt, bei welchem bei der Zwischenkalibrierung Ausbringmaterial aus der Materialeinspeisevorrichtung ausgeleitet wird. Bei der Zwischenkalibrierung wird eine Luftströmung in die Materialeinspeisevorrichtung eingeleitet und/oder es werden mit Ausbringmaterial beladene Förderluftströmungen erzeugt. Die Menge des während der Zwischenkalibrierung aus der Materialeinspeisevorrichtung ausgeleiteten Ausbringmaterials ist im Rahmen der Zwischenkalibrierung zu ermitteln und beim Berechnen der die Ausbringmenge beeinflussenden und fahrgeschwindigkeitsabhängigen Dosiervorgaben zu berücksichtigen.

Es ist ferner ein erfindungsgemäßes Verfahren bevorzugt, bei welchem die Steuerungseinrichtung bei der Zwischenkalibrierung die Menge des aus der Materialeinspeisevorrichtung ausgeleiteten Ausbringmaterials berücksichtigt. Die Menge des aus der Materialeinspeisevorrichtung ausgeleiteten Ausbringmaterials kann dabei berechnet oder sensorisch erfasst werden. Die durch den Kraftaufnehmer erfasste Gewichtskraftänderung während der Zwischenkalibrierung ergibt sich aufgrund der Differenz von in die Materialeinspeisevorrichtung eingeleitetem Ausbringmaterial und aus der Materialeinspeisevorrichtung ausgeleitetem Ausbringmaterial. Da zur Kalibrierung der landwirtschaftlichen Ausbringmaschine, die während der Kalibrierung in die Materialeinspeisevorrichtung eingeleitete Menge an Ausbringmaterial zu berücksichtigen ist, ist die Steuerungseinrichtung dazu eingerichtet, die während der Zwischenkalibrierung in die Materialeinspeisevorrichtung eingeleitete Menge an Ausbringmaterial auf Grundlage der Gewichtskraftänderung und der Menge des aus der Materialeinspeisevorrichtung ausgeleiteten Ausbringmaterials zu berechnen.

In einer weiteren bevorzugten Ausführungsform des erfindungsgemäßen Verfahrens veranlasst die Steuerungseinrichtung das Kalibrieren der landwirtschaftlichen Ausbringmaschine bei Vorliegen eines vordefinierten Kalibrierereignisses und/oder in regelmäßigen Abständen. Kalibrierereignisse können bspw. Wendevorgänge sein, welche zwischen Parallelfahrten und/oder im Vorgewende ausgeführt werden. Ferner kann ein Kalibrierereignis auch eine Geschwindigkeitsänderung betreffen, welche sich bspw. aufgrund sich ändernder Ausbringumstände ergibt. Ferner kann das Kalibrieren auch bei andauernder hoher Luftfeuchtigkeit und/oder andauerndem Niederschlag veranlasst werden. Wenn die Steuerungseinrichtung das Kalibrieren in regelmäßigen zeitlichen Abständen veranlasst, kann das Kalibrieren bspw. in einem 5-Minuten-Rhythmus oder einem 10-Minuten-Rhythmus oder einem 15-Minuten-Rhythmus erfolgen.

In einer weiteren bevorzugten Ausführungsform des erfindungsgemäßen Verfahrens erfolgt ein Ermitteln einer materialspezifischen Materialsollausbringmenge. Die materialspezifische Materialsollausbringmenge kann abhängig sein von dem Tausendkorngewicht (TKG), der Kornanzahl pro Quadratmeter und der Keimfähigkeit eines Saatgut-Ausbringmaterials. Die zum Ermitteln der materialspezifischen Materialsollausbringmenge erforderlichen Angaben kann der Bediener bspw. über ein Bedienterminal eingeben. Einzelne Parameter, wie bspw. das Tausendkorngewicht und/oder die Keimfähigkeit, können auch von einer Datenbank abgerufen werden.

Es ist ferner ein erfindungsgemäßes Verfahren vorteilhaft, bei welchem das Kalibrieren der landwirtschaftlichen Ausbringmaschine das Ermitteln einer einstellungsspezifischen Materialistausbringmenge unter Verwendung einer eingestellten Maschinenkonfiguration umfasst. Alternativ oder zusätzlich umfasst das Kalibrieren der landwirtschaftlichen Ausbringmaschine das Ermitteln von geeigneten fahrgeschwindigkeitsabhängigen Dosiervorgaben oder einer geeigneten Anpassung von eingestellten fahrgeschwindigkeitsabhängigen Dosiervorgaben anhand eines Vergleichs der ermittelten materialspezifischen Materialsollausbringmenge und der einstellungsspezifischen Materialistausbringmenge. Die materialspezifische Materialsollausbringmenge kann eine flächenbezogene materialspezifische Materialsollausbringmenge sein.

Das erfindungsgemäße Verfahren wird ferner dadurch vorteilhaft weitergebildet, dass die einstellungsspezifische Materialistausbringmenge mittels des Kraftaufnehmers der landwirtschaftlichen Ausbringmaschine ermittelt wird. Hierzu rechnet die Steuerungseinrichtung vorzugsweise die über den Kraftaufnehmer ermittelte Gewichtskraftänderung, ggf. unter Berücksichtigung weiterer Parameter, in die einstellungsspezifische Materialistausbringmenge um.

In einer weiteren bevorzugten Ausführungsform des erfindungsgemäßen Verfahrens umfasst das Verteilen des Ausbringmaterials auf mehrere Ausbringeinheiten mittels des Materialverteilsystems das Erzeugen von mehreren mit dem Ausbringmaterial beladenen Förderluftströmungen auf Grundlage des Einspeisevorrats und einer in die Materialeinspeisevorrichtung eingeleiteten Luftströmung und/oder das Aufnehmen von Ausbringmaterial einer mit Ausbringmaterial beladenen Förderluftströmung durch zumindest eine Materialaufnahmevorrichtung. Alternativ oder zusätzlich umfasst das Verteilen des Ausbringmaterials auf mehrere Ausbringeinheiten mittels des Materialverteilsystems das temporäre Bevorraten des aufgenommenen Ausbringmaterials als Abgabevorrat durch die Materialaufnahmevorrichtung und/oder das Dosieren des von der Materialaufnahmevorrichtung aus dem Abgabevorrat bereitgestellte Ausbringmaterial für die Abgabe auf eine landwirtschaftliche Nutzfläche mittels eines Abgabedosierers des Materialverteilsystems.

Das erfindungsgemäße Verfahren wird ferner dadurch vorteilhaft weitergebildet, dass die Steuerungseinrichtung den Abgabedosierer in Abhängigkeit des Füllstands des Einspeisevorrats der Materialeinspeisevorrichtung und/oder der Füllstandsänderung des Einspeisevorrats der Materialeinspeisevorrichtung steuert. Im Rahmen des Verfahrens kann der Füllstand des Einspeisevorrats der Materialeinspeisevorrichtung und/oder die Füllstandsänderung des Einspeisevorrats der Materialeinspeisevorrichtung sensorisch erfasst werden, insbesondere mittels einer Füllstandserfassungseinrichtung der Materialaufnahmevorrichtung. Die Füllstandserfassungseinrichtung kann durch den Kraftaufnehmer gebildet werden oder den Kraftaufnehmer umfassen.

Die der Erfindung zugrunde liegende Aufgabe wird ferner durch eine landwirtschaftliche Ausbringmaschine der eingangs genannten Art gelöst, wobei die erfindungsgemäße landwirtschaftliche Ausbringmaschine einen Kraftaufnehmer aufweist, welcher dazu eingerichtet ist, zum Kalibrieren der landwirtschaftlichen Ausbringmaschine eine Gewichtskraft zu ermitteln, welche zumindest anteilig auch eine von dem Einspeisevorrat in der Materialeinspeisevorrichtung ausgehende Gewichtskraft umfasst.

Die erfindungsgemäße landwirtschaftliche Ausbringmaschine wird ferner dadurch vorteilhaft weitergebildet, dass die landwirtschaftliche Ausbringmaschine dazu eingerichtet ist, gemäß eines Verfahrens nach einer der vorstehend beschriebenen Ausführungsformen betrieben zu werden. Hinsichtlich der Vorteile und Modifikationen der erfindungsgemäßen Ausbringmaschine wird somit auf die Vorteile und Modifikationen des erfindungsgemäßen Verfahrens verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Materialverteilsystem einer erfindungsgemäßen landwirtschaftlichen Ausbringmaschine in einer schematischen Darstellung;
- Fig. 2: ein Materialverteilsystem einer weiteren erfindungsgemäßen landwirtschaftlichen Ausbringmaschine in einer schematischen Darstellung;
- Fig. 3: eine Materialeinspeisevorrichtung einer erfindungsgemäßen landwirtschaftlichen Ausbringmaschine in einer schematischen Darstellung; und
- Fig. 4: den Verfahrensablauf eines erfindungsgemäßen Verfahrens in einem schematischen Ablaufdiagramm.

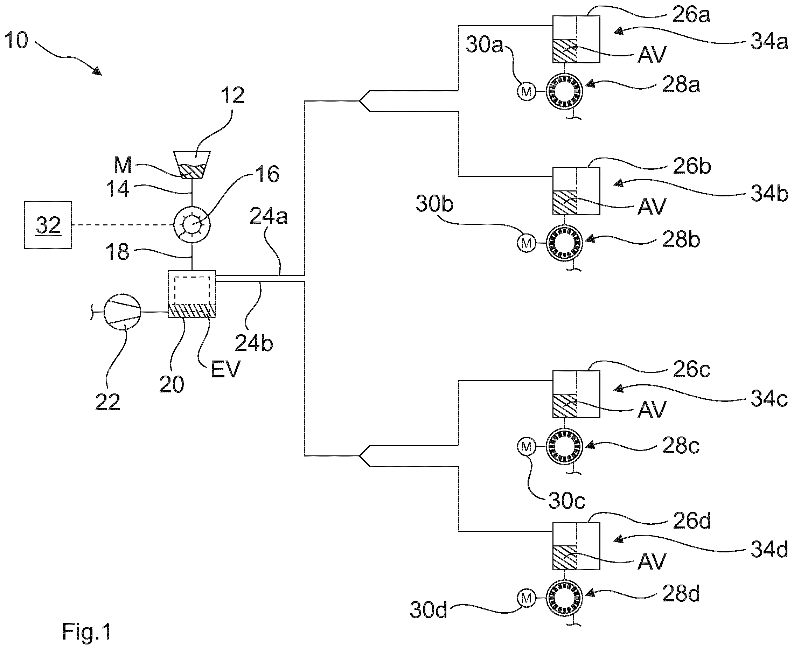

Die Fig.1 zeigt ein Materialverteilsystem 10 für eine landwirtschaftliche Ausbringmaschine. Das Materialverteilsystem 10 umfasst einen Vorratsbehälter 12 zum Bevorraten von Ausbringmaterial M. Das Ausbringmaterial M kann Saatgut oder Dünger sein. Der Vorratsbehälter 12 ist über eine Beschickungsleitung 14 mit einem Einspeisedosierer 16 verbunden. Der Einspeisedosierer 16 ist dazu eingerichtet, das Ausbringmaterial M aus dem Vorratsbehälter 12 für die Einleitung in eine Materialeinspeisevorrichtung 20 zu dosieren. Der Einspeisedosierer 16 kann bspw. ein Dosier-Zellenrad oder eine Dosierschnecke sein. Das vom Einspeisedosierer 16 vordosierte Ausbringmaterial M wird der Materialeinspeisevorrichtung 20 über die Materialzuführleitung 18 zugeführt.

Die Materialeinspeisevorrichtung 20 ist dazu eingerichtet, dass von dem Einspeisedosierer 16 vordosierte Ausbringmaterial M aufzunehmen und temporär als Einspeisevorrat EV zu bevorraten. Die Materialeinspeisevorrichtung 20 erzeugt auf Grundlage des Einspeisevorrats EV und einer in die Materialeinspeisevorrichtung 20 eingeleiteten Luftströmung mehrere mit dem Ausbringmaterial M beladene Förderluftströmungen F. Die in die Materialeinspeisevorrichtung 20 eingeleitete Luftströmung wird durch einen als Gebläse ausgebildeten Strömungserzeuger 22 erzeugt.

Die Materialeinspeisevorrichtung 20 ist über Förderleitungen 24a, 24b mit Materialaufnahmevorrichtungen 26a-26d verbunden. Die Materialaufnahmevorrichtungen 26a-26d sind dazu eingerichtet, das Ausbringmaterial M einer mit Ausbringmaterial M beladenden Förderluftströmung F aufzunehmen und temporär als Abgabevorrat AV zu bevorraten.

Die Materialaufnahmevorrichtungen 26a-26d sind jeweils mit einem Abgabedosierer 28a-28d verbunden. Die Abgabedosierer 28a-28d sind dazu eingerichtet, dass von der Materialaufnahmevorrichtung 26a-26d aus dem Abgabevorrat AV bereitgestellte Ausbringmaterial M für die Abgabe auf eine landwirtschaftliche Nutzfläche zu dosieren. Die Abgabedosierer 28a-28d umfassen jeweils ein rotierend angetriebenes Dosierelement. Die Dosierelemente der Abgabedosierer 28a-28d werden von einem Motor 30a-30d angetrieben. Die Motoren 30a-30d sind Elektromotoren.

Die landwirtschaftliche Ausbringmaschine umfasst mehrere Ausbringeinheiten 34a-34d, wobei jede Ausbringeinheit 34a-34d eine Materialaufnahmevorrichtung 26a-26d, einen Abgabedosierer 28a-28d und einen Motor 30a-30d umfasst.

Das Materialverteilsystem 10 umfasst ferner eine elektronische Steuerungseinrichtung 32, welche den Einspeisedosierer 16 und Berücksichtigung einer vorgenommenen Kalibrierung steuert.

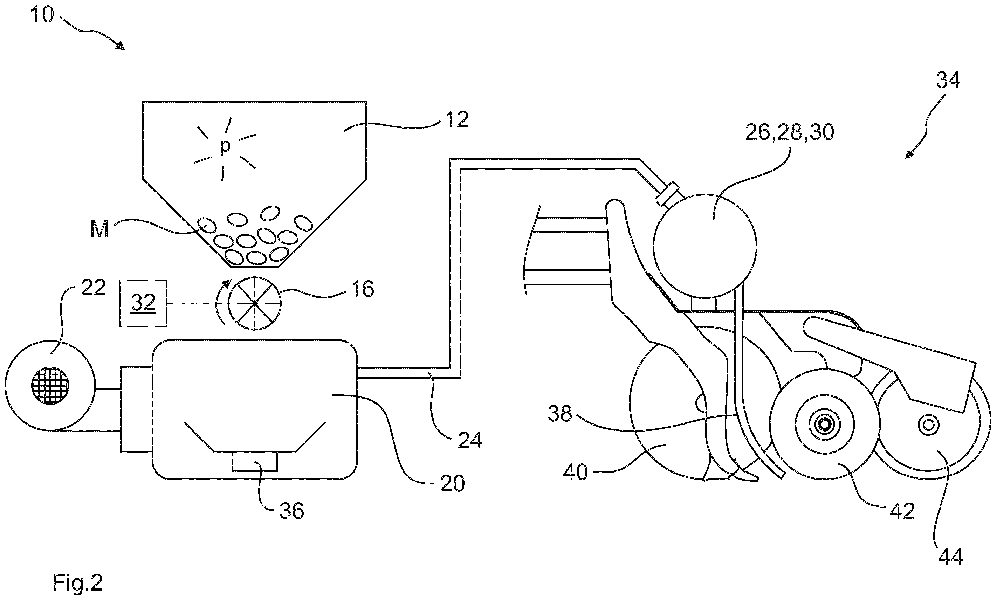

Die Fig. 2 zeigt ein Materialverteilsystem 10, bei welchem die Materialeinspeisevorrichtung 20 einen Kraftaufnehmer 36 aufweist. Der Kraftaufnehmer 36 erfasst sensorisch die Gewichtskraft des Einspeisevorrats EV der Materialeinspeisevorrichtung 20. Der Kraftaufnehmer 36 umfasst zum Erfassen der Gewichtskraft des Einspeisevorrats EV eine Wiegezelle.

Die Materialaufnahmevorrichtung 26, der Abgabedosierer 28 und der Motor 30 sind Bestandteil einer Ausbringeinheit 34. Eine landwirtschaftliche Ausbringmaschine weist üblicherweise mehrere in Querrichtung nebeneinander angeordnete Ausbringeinheiten 34 auf.

Die Ausbringeinheit 34 umfasst eine Ablageleitung 38, über welche das dosierte Ausbringmaterial M in die Richtung der landwirtschaftlichen Nutzfläche abgegeben wird. Die Ablageleitung 38 kann als Schussrohr ausgebildet sein. Die Ausbringeinheit 34 umfasst ferner einen Furchenöffner 40 zum Öffnen einer Ablagefurche für das Ausbringmaterial M. Der Furchenöffner kann bspw. zwei Schneidscheiben umfassen und als Doppelscheibenschar ausgebildet sein. Alternativ kann der Furchenöffner 40 auch als Zinkenschar ausgebildet sein. Die Ausbringeinheit 34 umfasst ferner ein Andruckelement 42, welches als Andruckrolle ausgebildet ist. Das Andruckelement 42 dient zum Fangen und Andrücken des über die Ablageleitung 38 abgegebenen Ausbringmaterials M. Hinter dem Andruckelement 42, welches als Andruckrolle ausgebildet ist, befindet sich ein Furchenschließer 44. Der Furchenschließer dient zum Schließen der Ablagefurche, in welche das Ausbringmaterial M abgelegt wurde.

Eine elektronische Steuerungseinrichtung 32 ist dazu eingerichtet, die landwirtschaftliche Ausbringmaschine unter Berücksichtigung der Gewichtskraft des Einspeisevorrats EV der Materialeinspeisevorrichtung 20 zu kalibrieren. Beim Kalibrieren der landwirtschaftlichen Ausbringmaschine passt die Steuerungseinrichtung 32 die Ausbringmenge beeinflussende und fahrgeschwindigkeitsabhängige Dosiervorgaben für das Ausbringmaterial M an Materialeigenschaften des Ausbringmaterials M an.

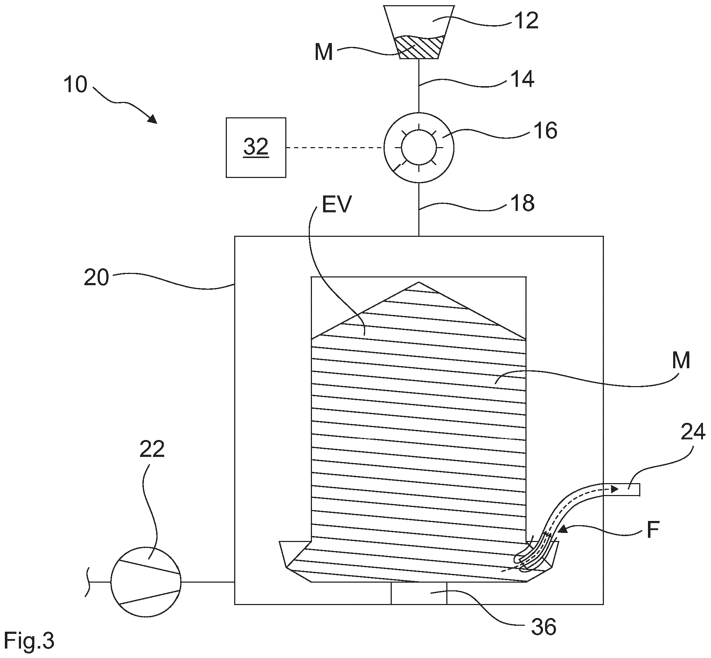

Die Fig. 3 zeigt einen Materialaufnahmebereich einer Materialeinspeisevorrichtung 20. Die Materialeinspeisevorrichtung 20 ist dazu eingerichtet, von einem Einspeisedosierer 16 vordosiertes Ausbringmaterial M aufzunehmen und temporär als Einspeisevorrat EV zu bevorraten. Auf Grundlage des Einspeisevorrats EV und einer von einem Strömungserzeuger 22 erzeugten und in die Materialeinspeisevorrichtung 20 eingeleiteten Luftströmung erzeugt die Materialeinspeisevorrichtung 20 mehrere mit dem Ausbringmaterial M beladene Förderluftströmungen F. Die erzeugten Förderluftströmungen F werden in Förderleitungen 24 eingeleitet.

Die Steuerungseinrichtung 32 ermittelt beim Kalibrieren der landwirtschaftlichen Ausbringmaschine eine Gewichtskraftänderung auf Grundlage der Messwerte des Kraftaufnehmers 36 und vergleicht die Gewichtskraftänderung mit einem Sollwert.

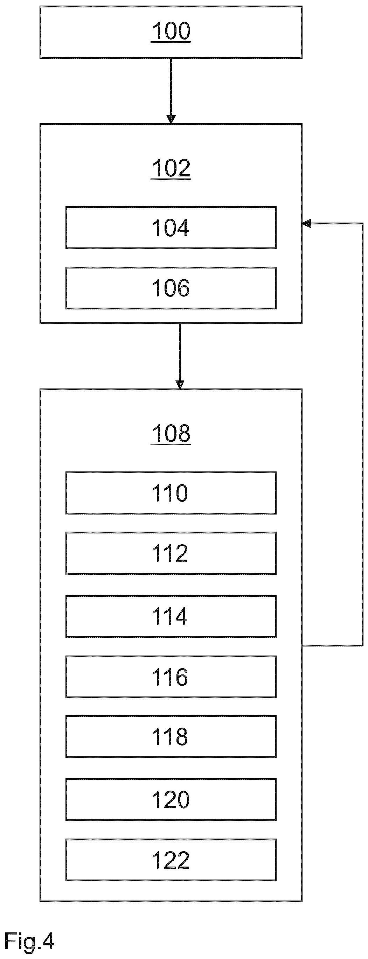

Die Fig. 4 zeigt beispielhaft den Ablauf eines Verfahrens zum Betreiben einer landwirtschaftlichen Ausbringmaschine, nämlich einer landwirtschaftlichen Sämaschine.

Zunächst wird im Schritt 100 von der elektronischen Steuerungseinrichtung 32 eine materialspezifische Materialsollausbringmenge für den geplanten Ausbringvorgang ermittelt. Die materialspezifische Materialsollausbringmenge ist abhängig von dem Tausendkorngewicht (TKG) des auszubringenden Saatguts, der erforderlichen Kornzahl pro Quadratmeter und der Keimfähigkeit des Saatguts. Diese Angaben können von einem Bediener über ein Bedienterminal eingegeben werden oder durch die Steuerungseinrichtung 32 aus einer Datenbank abgerufen werden.

Nachdem die materialspezifische Materialsollausbringmenge ermittelt wurde, erfolgt im Schritt 102 das Kalibrieren der landwirtschaftlichen Ausbringmaschine. Im Rahmen der Kalibrierung ist im Schritt 104 zunächst eine einstellungsspezifische Materialistausbringmenge zu ermitteln. Das Ermitteln der einstellungsspezifischen Materialistausbringmenge erfolgt unter Verwendung einer eingestellten Maschinenkonfiguration. Zum Ermitteln der einstellungsspezifischen Materialistausbringmenge erfasst die Steuerungseinrichtung 32 die Gewichtsänderung des Einspeisevorrats EV in der Materialeinspeisevorrichtung 20 auf Grundlage der Messwerte eines Kraftaufnehmers 36. Der Kraftaufnehmer 36 liefert Messwerte für eine Gewichtskraft, welche zumindest anteilig auch eine von dem Einspeisevorrat EV in der Materialeinspeisevorrichtung 20 ausgehende Gewichtskraft umfasst.

Nachdem die einstellungsspezifische Materialistausbringmenge ermittelt wurde, wird diese mit der im Schritt 100 ermittelten materialspezifischen Materialsollausbringmenge verglichen, sodass im Schritt 106 die die Ausbringmenge beeinflussenden und fahrgeschwindigkeitsabhängigen Dosiervorgaben für das Ausbringmaterial M in geeigneter Weise anpasst werden können. Wenn die einstellungsspezifische Materialistausbringmenge geringer ist als die materialspezifische Materialsollausbringmenge, sind die Dosiervorgaben so anzupassen, dass die vom Einspeisedosierer 16 in die Materialeinspeisevorrichtung 20 eindosierte Materialmenge angehoben wird. Wenn die einstellungsspezifische Materialistausbringmenge höher ist als die materialspezifische Materialsollausbringmenge, sind die Dosiervorgaben so anzupassen, dass die vom Einspeisedosierer 16 in die Materialeinspeisevorrichtung 20 eindosierte Materialmenge verringert wird.

Die beschriebene Kalibrierung wird von der Steuerungseinrichtung 32 zunächst im Rahmen einer Vorkalibrierung vor dem Ausbringvorgang durchführt.

Nach erfolgter Kalibrierung kann das Ausbringmaterial mittels eines Materialverteilsystems 10 der landwirtschaftliche Ausbringmaschine unter Einhaltung der angepassten fahrgeschwindigkeitsabhängigen Dosiervorgaben im Schritt 108 auf mehrere Ausbringeinheiten 34a-34d verteilt werden.

Hierzu wird das Ausbringmaterial M im Schritt 110 aus dem Vorratsbehälter 12 unter Einhaltung der angepassten fahrgeschwindigkeitsabhängigen Dosiervorgaben zunächst vordosiert, sodass das vordosierte Ausbringmaterial im Schritt 112 durch die Materialeinspeisevorrichtung 20 des Materialverteilsystems 10 aufgenommen werden kann. Das aufgenommene Ausbringmaterial M wird im Schritt 114 durch die Materialeinspeisevorrichtung temporär als Einspeisevorrat EV bevorratet. Im Schritt 116 werden mehrere mit dem Ausbringmaterial M beladene Förderluftströmungen F erzeugt, sodass das Ausbringmaterial M der mit Ausbringmaterial M beladenen Förderluftströmungen F im Schritt 118 durch mehrere Materialaufnahmevorrichtungen 26a-26d aufgenommen werden kann.

Das von den Materialaufnahmevorrichtungen 26a-26d aufgenommene Ausbringmaterial M wird im Schritt 120 durch die Materialaufnahmevorrichtungen 26a-26d als Abgabevorrat AV temporär bevorratet, bevor das von den Materialaufnahmevorrichtungen 26a-26d aus dem Abgabevorrat AV bereitgestellte Ausbringmaterial M für die Abgabe auf eine landwirtschaftliche Nutzfläche im Schritt 122 durch die Abgabedosierer 28a-28d der Ausbringeinheiten 34a-34d dosiert wird.

Die Steuerungseinrichtung 32 führt das Kalibrieren der landwirtschaftlichen Ausbringmaschine im Rahmen von Zwischenkalibrierungen mehrfach während eines Ausbringvorgangs durch. Die Steuerungseinrichtung 32 veranlasst das Kalibrieren der landwirtschaftlichen Ausbringmaschine entweder bei Vorliegen eines vordefinierten Kalibrierereignisses oder in regelmäßigen zeitlichen Abständen.

### Bezugszeichen

- 10: Materialverteilsystem
- 12: Vorratsbehälter
- 14: Beschickungsleitung
- 16: Einspeisedosierer
- 18: Materialzuführleitung
- 20: Materialeinspeisevorrichtung
- 22: Strömungserzeuger
- 24, 24a, 24b: Förderleitungen
- 26, 26a-26d: Materialaufnahmevorrichtungen
- 28, 28a-28d: Abgabedosierer
- 30, 30a-30d: Motor
- 32: Steuerungseinrichtung
- 34, 34a-34d: Ausbringeinheiten
- 36: Kraftaufnehmer
- 38: Ablageleitung
- 40: Furchenöffner
- 42: Andruckelement
- 44: Furchenschließer

- 100-122: Verfahrensschritte

- AV: Abgabevorrat
- EV: Einspeisevorrat
- F: Förderluftströmung
- M: Ausbringmaterial

## Patentansprüche

1. Verfahren zum Betreiben einer landwirtschaftlichen Ausbringmaschine, mit den Schritten:
- Kalibrieren der landwirtschaftlichen Ausbringmaschine, wobei eine elektronische Steuerungseinrichtung (32) beim Kalibrieren der landwirtschaftlichen Ausbringmaschine die Ausbringmenge beeinflussende und fahrgeschwindigkeitsabhängige Dosiervorgaben für das Ausbringmaterial (M) an Materialeigenschaften des Ausbringmaterials (M) anpasst, und
- Verteilen von Ausbringmaterial (M) auf mehrere Ausbringeinheiten (34, 34a-34d) mittels eines Materialverteilsystems (10) der landwirtschaftliche Ausbringmaschine, wobei eine Materialeinspeisevorrichtung (20) des Materialverteilsystems (10) von einem Einspeisedosierer (16) unter Einhaltung der angepassten fahrgeschwindigkeitsabhängigen Dosiervorgaben vordosiertes Ausbringmaterial (M) aufnimmt und temporär als Einspeisevorrat (EV) bevorratet, um auf Grundlage des Einspeisevorrats (EV) und einer in die Materialeinspeisevorrichtung (20) eingeleiteten Luftströmung mehrere mit dem Ausbringmaterial (M) beladene Förderluftströmungen (F) zu erzeugen;
**dadurch gekennzeichnet, dass** das Kalibrieren der landwirtschaftlichen Ausbringmaschine unter Verwendung eines Kraftaufnehmers (36) der landwirtschaftlichen Ausbringmaschine erfolgt, welcher eine Gewichtskraft ermittelt, welche zumindest anteilig auch eine von dem Einspeisevorrat (EV) in der Materialeinspeisevorrichtung (20) ausgehende Gewichtskraft umfasst.

2. Verfahren nach Anspruch 1,
**dadurch gekennzeichnet, dass** die Steuerungseinrichtung (32) beim Kalibrieren der landwirtschaftlichen Ausbringmaschine eine Gewichtskraftänderung auf Grundlage der Messwerte des Kraftaufnehmers (36) der landwirtschaftlichen Ausbringmaschine ermittelt und die Gewichtskraftänderung mit einem Sollwert vergleicht.

3. Verfahren nach Anspruch 1 oder 2,
**dadurch gekennzeichnet, dass** die Steuerungseinrichtung (32) das Kalibrieren der landwirtschaftlichen Ausbringmaschine im Rahmen einer Vorkalibrierung vor einem Ausbringvorgang durchführt.

4. Verfahren nach Anspruch 3,
**dadurch gekennzeichnet, dass** bei der Vorkalibrierung kein Ausbringmaterial (M) aus der Materialeinspeisevorrichtung (20) ausgeleitet wird.

5. Verfahren nach einem der vorstehenden Ansprüche,
**dadurch gekennzeichnet, dass** die Steuerungseinrichtung (32) das Kalibrieren der landwirtschaftlichen Ausbringmaschine im Rahmen einer Zwischenkalibrierung einfach oder mehrfach während eines Ausbringvorgangs durchführt.

6. Verfahren nach Anspruch 5,
**dadurch gekennzeichnet, dass** bei der Zwischenkalibrierung Ausbringmaterial (M) aus der Materialeinspeisevorrichtung (20) ausgeleitet wird.

7. Verfahren nach Anspruch 5 oder 6,
**dadurch gekennzeichnet, dass** die Steuerungseinrichtung (32) bei der Zwischenkalibrierung die Menge des aus der Materialeinspeisevorrichtung (20) ausgeleiteten Ausbringmaterials (M) berücksichtigt.

8. Verfahren nach einem der vorstehenden Ansprüche,
**dadurch gekennzeichnet, dass** die Steuerungseinrichtung (32) das Kalibrieren der landwirtschaftlichen Ausbringmaschine bei Vorliegen eines vordefinierten Kalibrierereignisses und/oder in regelmäßigen Abständen veranlasst.

9. Verfahren nach einem der vorstehenden Ansprüche,
**gekennzeichnet durch** den Schritt:
- Ermitteln einer materialspezifischen Materialsollausbringmenge.

10. Verfahren nach einem der vorstehenden Ansprüche,
**dadurch gekennzeichnet, dass** das Kalibrieren der landwirtschaftlichen Ausbringmaschine einen oder beide der folgenden Schritte umfasst:
- Ermitteln einer einstellungsspezifischen Materialistausbringmenge unter Verwendung einer eingestellten Maschinenkonfiguration;
- Ermitteln von geeigneten fahrgeschwindigkeitsabhängigen Dosiervorgaben oder einer geeigneten Anpassung von eingestellten fahrgeschwindigkeitsabhängigen Dosiervorgaben anhand eines Vergleichs der ermittelten materialspezifischen Materialsollausbringmenge und der einstellungsspezifischen Materialistausbringmenge.

11. Verfahren nach Anspruch 10,
**dadurch gekennzeichnet, dass** die einstellungsspezifische Materialistausbringmenge mittels des Kraftaufnehmers (36) der landwirtschaftlichen Ausbringmaschine ermittelt wird.

12. Verfahren nach einem der vorstehenden Ansprüche,
**dadurch gekennzeichnet, dass** das Verteilen des Ausbringmaterials (M) auf mehrere Ausbringeinheiten (34, 34a-34d) mittels des Materialverteilsystems (10) einen, mehrere oder sämtliche der folgenden Schritte umfasst:
- Erzeugen von mehreren mit dem Ausbringmaterial (M) beladenen Förderluftströmungen (F) auf Grundlage des Einspeisevorrats (EV) und einer in die Materialeinspeisevorrichtung (20) eingeleiteten Luftströmung;
- Aufnehmen von Ausbringmaterial (M) einer mit Ausbringmaterial (M) beladenen Förderluftströmung (F) durch zumindest eine Materialaufnahmevorrichtung (26, 26a-26d),
- temporäres Bevorraten des aufgenommenen Ausbringmaterials (M) als Abgabevorrat (AV) durch die Materialaufnahmevorrichtung (26, 26a-26d);
- Dosieren des von der Materialaufnahmevorrichtung (26, 26a-26d) aus dem Abgabevorrat (AV) bereitgestellte Ausbringmaterial (M) für die Abgabe auf eine landwirtschaftliche Nutzfläche mittels eines Abgabedosierers (28, 28a-28d) des Materialverteilsystems (10).

13. Verfahren nach Anspruch 12,
**dadurch gekennzeichnet, dass** die Steuerungseinrichtung (32) den Abgabedosierer (28, 28a-28d) in Abhängigkeit des Füllstandes des Einspeisevorrats (EV) der Materialeinspeisevorrichtung (20) und/oder der Füllstandsänderung des Einspeisevorrats (EV) der Materialeinspeisevorrichtung (20) steuert.

14. Landwirtschaftliche Ausbringmaschine, mit
- mehreren Ausbringeinheiten (34, 34a-34d) zum Ausbringen von Ausbringmaterial (M) auf eine landwirtschaftliche Nutzfläche;
- einem Materialverteilsystem (10) zum Verteilen von Ausbringmaterial (M) auf die mehreren Ausbringeinheiten (34, 34a-34d), und
- einer elektronischen Steuerungseinrichtung (32), welche dazu eingerichtet ist, bei einem Kalibrieren der landwirtschaftlichen Ausbringmaschine die Ausbringmenge beeinflussende und fahrgeschwindigkeitsabhängige Dosiervorgaben für das Ausbringmaterial (M) an Materialeigenschaften des Ausbringmaterials (M) anzupassen,
wobei das Materialverteilsystem (10) eine Materialeinspeisevorrichtung (20) umfasst, welche dazu eingerichtet ist, von einem Einspeisedosierer (16) unter Einhaltung der angepassten fahrgeschwindigkeitsabhängigen Dosiervorgaben vordosiertes Ausbringmaterial (M) aufzunehmen und temporär als Einspeisevorrat (EV) zu bevorraten, um auf Grundlage des Einspeisevorrats (EV) und einer in die Materialeinspeisevorrichtung (20) eingeleiteten Luftströmung mehrere mit dem Ausbringmaterial (M) beladene Förderluftströmungen (F) zu erzeugen;
**gekennzeichnet durch** einen Kraftaufnehmer (36), welcher dazu eingerichtet ist, zum Kalibrieren der landwirtschaftlichen Ausbringmaschine eine Gewichtskraft zu ermitteln, welche zumindest anteilig auch eine von dem Einspeisevorrat (EV) in der Materialeinspeisevorrichtung (20) ausgehende Gewichtskraft umfasst.

15. Landwirtschaftliche Ausbringmaschine nach Anspruch 14,
**dadurch gekennzeichnet, dass** die landwirtschaftliche Ausbringmaschine dazu eingerichtet ist, gemäß eines Verfahrens nach einem der Ansprüche 1 bis 13 betrieben zu werden.
